Europäisches Patentamt

European Patent Office.

Office européen des brevets

(19)

(11) Publication number: **0 375 468**
**A2**

## (12) EUROPEAN PATENT APPLICATION

(21) Application number: 89313580.6

(22) Date of filing: 22.12.89

(51) Int. Cl.⁵: **G07F 9/02, G07F 15/00, G07F 7/00**

(30) Priority: 23.12.88 GB 8830058

(43) Date of publication of application:
27.06.90 Bulletin 90/26

(84) Designated Contracting States:
AT BE CH DE ES FR GB GR IT LI LU NL SE

(71) Applicant: **SOUTH WESTERN ELECTRICITY BOARD**
**800 Park Avenue Aztec West**
**Almondsbury Bristol, BS12 4SE(GB)**

(72) Inventor: **Watts, David Reginald**
**c/o 800 Park Avenue Aztec West,**
**Almondsbury**
**Bristol BS12 4SE(GB)**

(74) Representative: **Calderbank, Thomas Roger et al**
**MEWBURN ELLIS 2 Cursitor Street**
**London EC4A 1BQ(GB)**

(54) Data transmission.

(57) A system for capturing data from a vending unit for an electronic token-based electricity metering system. The data capture system records transactions taking place at the vending unit (10) and relays the captured data to a remote unit e.g. a central computer (30) at a suitable time. The transmission may be accomplished via a modem (24), a telephone line (26), and a second modem (28). Data captured can include meter readings carried by the electronic token from the meter (12), and purchase data generated by the vending unit (10). The data-capture unit (18) comprises a processor connected to the vending unit (10) and the modem (24), and electronic memory for storing transaction records. While the unit is generally operated by an external power supply, it may also be provided with an internal supply as an emergency back-up.

Fig 1

Xerox Copy Centre

## DATA TRANSMISSION

The present invention is concerned with the transmission of data from a vending location to a central site.

Traditionally, metered supply of electricity, where payment is to occur directly on supply, has been via coin-operated meters at the site where the electricity is to be used. However, such coin-operated meters are subject to e.g. vandalism, and therefore systems have been developed where payment can be made at a different site. In one such system, a key token can be purchased at a vending unit at a suitable location, with the amount of electricity thus bought being electronically recorded on the token, and then the token transferred to the meter which supplies the amount of electricity paid for.

In a further development of this known system, the key token may also carry information about the meter and its site, such as meter readings, etc., to the vending unit for processing there.

In such existing systems, the vending unit has no memory allocated to the storing of data, and therefore the information received from the key token, and also the information programmed into the key token when the key token is re-programmed by the purchase of more electricity at the vending unit, is directly printed onto e.g. paper. If the information from a large number of vending units is to be centrally processed, the paper must then be collected and re-entered into a computer for processing the information, which is not only time-consuming but is vulnerable to loss of data due to damage or loss of print-outs from the vending location.

Therefore, the present invention proposes that a data capture unit be provided, connected to the vending unit. The data capture unit contains electronic memory, to store information relating to a multiplicity of vending transactions, and contains a processor both to convert the information from the vending unit to suitable signals for the memory, and to allow signals from the memory to be transmitted via e.g. a modem to a telephone line, and hence via another modem to a central computer.

The number of vending transactions that can be stored in the memory or memories of the data capture unit is dependent on the amount of data recorded in each vending transaction (transaction record). According to a feature of the present invention, it is desired that the amount of data in a transaction record is fixed, so that the number of records stored, for a fixed size of memory or memories, is inversely proportional to the size of the transaction record.

As was mentioned above, the processor of the data capture unit should control both the supply of data from the vending unit, and also the transmission of data to a remote location. It is desirable that the processor is arranged so that it can carry out these two operations simultaneously. To prevent mishap, it is desirable that the processor contain sufficient memory space to contain at least a small number of transmission records, so that the record of one transaction will not be lost whilst the record of another transaction is being sent to or from the memory.

It is envisaged that the data capture unit will be powered by an external power supply, but it is preferable that an internal power supply also be provided as an emergency back-up.

An embodiment of then invention will now be described in detail, by way of example, with reference to the accompanying drawings, in which:

Fig. 1 shows a schematic view of a data transfer system according to the present invention; and

Fig. 2 shows details of the data capture unit of Fig. 1.

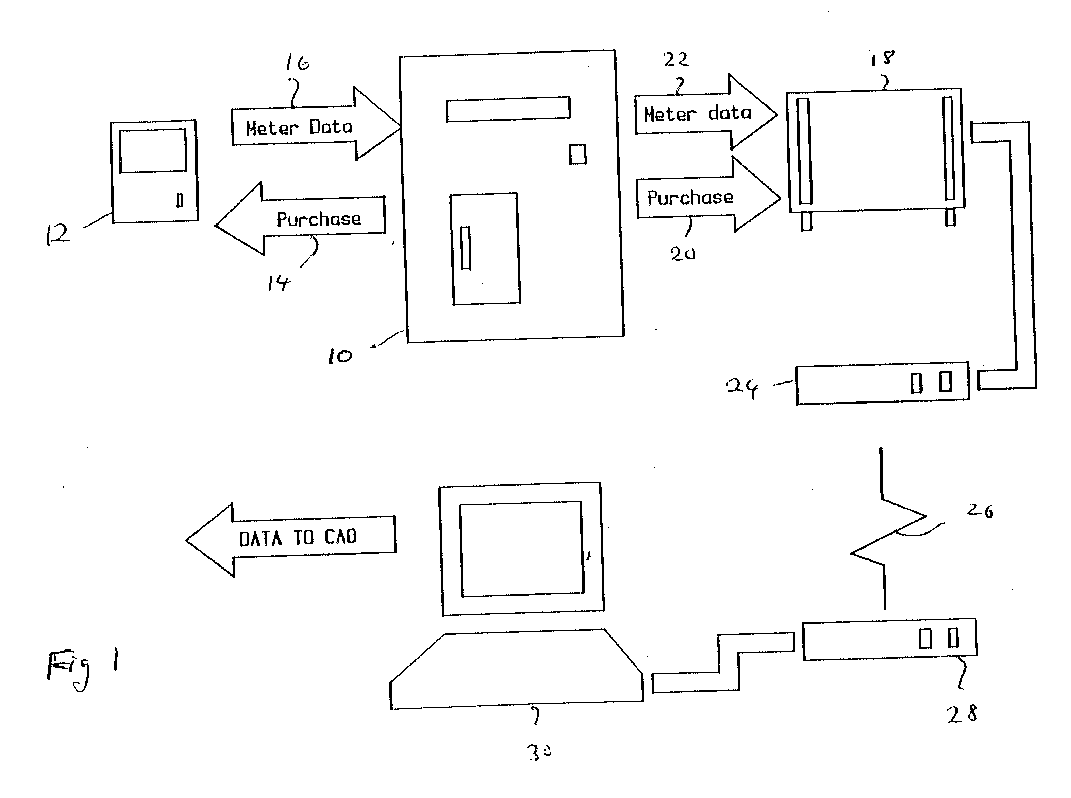

Referring first to Fig. 1, a vending unit 10 is provided which receives key tokens and, on suitable payment into the vending unit 10, re-programs those key tokens to record the amount of e.g. electricity that has been bought. The key token may then be transferred to a remote meter 12, and insertion of the key token in that meter 12 permits a measured amount of electricity to be supplied. Thus, as illustrated by arrow 14, there is transmission of purchase information from the vending unit 10 to the meter 12. However, the key token may also carry information from the meter 12, such as current meter readings, etc., and the transfer of data from the meter 12 to the vending unit 10 is represented by arrow 16. The system described so far is already known, and in such known systems the vending unit 10 records both the meter data and the purchase data on a paper roll (not shown). According to the present invention, however, the purchase and meter data are also supplied to a data capture unit 18, as represented by arrows 20,22. Of course, the information may continue to be printed on paper by the vending unit 10, but the present invention is concerned with the electronic transmission of the data.

As will be described in more detail later, the data capture unit 18 stores data from the vending unit, and at a suitable time transmits it via modem 24 to a telephone line 26, and thence via a further modem 28 to a central computer 30. That central computer 30 may receive information from a large number of remote vending units 10, for suitable processing of the information.

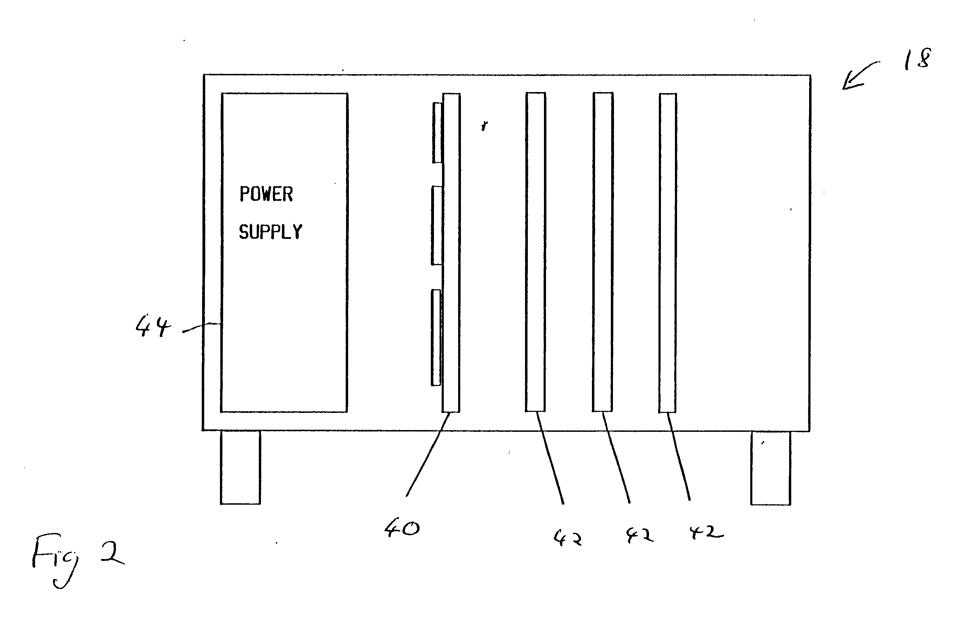

Referring now to Fig. 2, the data capture unit 18 comprises a processor 40 connected both to the vending unit 10 and the modem 24, and also to a plurality of memories 42 which store purchase information in the form of transaction records. As illustrated, the data capture unit 18 also has an internal power supply 44 which may act as a back-up to an external power supply. To prevent corruption of data during the transition between internal and external power supplies, the processor 40 may be provided with a suitable voltage sensing circuit which ensures that the voltage levels do not change unacceptably.

Whenever the vending unit 10 operates to program a key token, a transaction record is generated by the software of the vending unit 10. This transaction record is transmitted to the data capture unit 18, processed by the processor 40 and stored in one of the memories 42.

As was mentioned above, in this embodiment of the present invention, the length of each transaction record stored in the memory 42 is of fixed length. However, the transmission record produced by the vending unit 10 may be of different lengths, depending on the number of meter rates in use, etc. Therefore, the processor must convert the transaction record received from the vending unit 10 to a fixed length transaction record for storage in the memories 42. Before doing this, it checks that the transaction record received from the vending unit 10 is valid. This validation is achieved by comparing a validation code in the transaction record with a pre-recorded validation code. If there is a mis-match between the validation codes, the data is not accepted and the vending unit 10 must re-transmit the data. Similar validation operation is carried out when data is transmitted from the memories 42 via the processor 40 to the modem 24.

As is clear from the above, the processor 40 carries out two operations namely the transmission of transaction records to and from the memories 42. When transaction records are being transmitted from the memories 42, it may still be desirable for the data capture unit 18 to be receiving transmission records from the vending unit 10. The processor 40 may be programmed to carry out these two tasks simultaneously, but it may not be possible for the processor 40 to transmit transaction records both to and from the memories 24 simultaneously.

Therefore, in this embodiment, it is proposed that the transmission of transaction records from the memories 42 has priority. To prevent transaction records being lost, the processor 40 therefore has a memory area into which transaction records received from the vending unit 10 may be stored whilst other transaction records are transmitted from the memories 42 via the processor 40 to the modem 24. If the system is arranged so that transmission from the memories 42 occurs only when the vending unit 10 is not likely to be used (e.g. at night), the size of memory within the processor 40 may be small, e.g. to provide storage for five transaction records. The memory in the processor 40 may also be used when e.g. the memories 42 are completely full. Of course, since there is only limited memory capacity in the processor 40, the situation should be avoided if at all possible. Thus, for example, if 48190 memory bits are provided in the memories 42, and each transmission record has a length of 97 bits, then 496 records can be stored, which is thought to be enough for 5 to 6 days worth of records. Thus, if the data capture unit 18 is accessed by the computer 30 every night, it is extremely unlikely that the memory capacity of the data capture unit 18 will be exceeded.

Although described in connection with the metered supply of electricity, the present invention is also applicable to other systems where a commodity is supplied via meters, such as gas and telephones.

**Claims**

1. A vending system comprising a token vending unit (10) having means for receiving a token, means for receiving payment information, and means for modifying the token in accordance with the payment information;
a data capture unit (18,24) electrically connected to the token vending unit (10), having a memory for storing the payment information, and means (24) for transmitting the payment information;
a processor (28, 30) arranged to trigger the transmission means (24) of the data capture unit and to process the payment information.

2. A vending system according to claim 1, wherein the data capture unit has means for varying the data length of each item of payment information so as to modify the data length so that it has a predetermined length prior to transmission to the processor.

3. A vending system according to claim 1 or claim 2 further including a plurality of tokens each being arranged to store appropriate payment information.

4. A vending system according to claim 3, wherein the tokens are also arranged to receive meter information, and to transmit the meter information to the token vending unit.

5. A vending system according to claim 4, wherein the token vending unit is arranged to transmit the meter information to the data capture unit for storage and transmission to the processor.

6. A vending method, comprising:

inputting payment information to a token vending unit (10);

modifying a token in accordance with said payment information;

storing said payment information in a data capture unit (18);

transmitting said payment information from the data capture unit (18) to a processor, the transmission being triggered by a signal from the processor (30); and

processing the payment information in the processor.

7. A method according to claim 6, further comprising storing meter information in the token, transmitting the meter information to the token vending unit (10), and transmitting the meter information to the processor with corresponding payment information.

Fig 1

POWER SUPPLY

44

18

40

42 42 42

Fig 2

EP 0 375 468 A2